(19) Europäisches Patentamt / European Patent Office / Office européen des brevets

(11) **EP 1 085 637 B1**

(12) **EUROPÄISCHE PATENTSCHRIFT**

(45) Veröffentlichungstag und Bekanntmachung des Hinweises auf die Patenterteilung:
**07.02.2007 Patentblatt 2007/06**

(51) Int Cl.:
***H02J 3/26*** *(2006.01)*

(21) Anmeldenummer: **00810836.7**

(22) Anmeldetag: **15.09.2000**

(54) **Verfahren zur Kompensation von asymmetrischen Lasten in Mehrphasensystemen**

Method for compensating assymetrical loads in multi-phase systems

Méthode pour la compensation des charges asymétriques dans des systèmes polyphasés

(84) Benannte Vertragsstaaten:
**CH DE FR GB IT LI SE**

(30) Priorität: **20.09.1999 DE 19944917**

(43) Veröffentlichungstag der Anmeldung:
**21.03.2001 Patentblatt 2001/12**

(73) Patentinhaber: **ABB Schweiz AG**
**5400 Baden (CH)**

(72) Erfinder:
  • **Hillberg, Claes, Dr.**
    **4313 Möhlin (CH)**
  • **Linhofer, Gerhard**
    **5405 Baden-Dätwil (CH)**

(74) Vertreter: **ABB Patent Attorneys**
    **c/o ABB Schweiz AG,**
    **Intellectual Property (CH-LC/IP),**
    **Brown Boveri Strasse 6**
    **5400 Baden (CH)**

(56) Entgegenhaltungen:
  • **MANGOLD TH ET AL: "Netqualität im Griff" EV REPORT, XX, DE, Bd. 4, Nr. 4, 1996, Seiten 16-18, XP002091234 ISSN: 0938-0043**
  • **"Active Filter and Power Conditioner for Distribution Networks Sipcon P/S" POWER QUALITY CATALOG SR 10.5, [Online] 1998, XP002222141 Gefunden im Internet: <URL: http://www.siemens.cz/siemens/site/EN ERGIE/ev/ev_s/sekundarni_technika/katalog/ Kvalita_energie/uprava_kvality_energie/Sip con_PS_aktivni_filtr_en.pdf> [gefunden am 2002-11-22]**
  • **SONNENSCHEIN M ET AL: "Shunt-connected power conditioner for improvement of power quality in distribution networks" PROCEEDINGS OF THE ICHQP. INTERNATIONAL CONFERENCE ON HARMONICS AND QUALITY OF POWER, XX, XX, 18. Oktober 1996 (1996-10-18), Seiten 27-32, XP002090516**
  • **G. MÄRZ: "Die Blindleistungsschwankungen bei Lichtbogenöfen und ihre Kompensation mit Hilfe elektronisch regelbarer Phasenschieber" ELEKTROWÄRME INTERNATIONAL, Februar 1972 (1972-02), XP000112017**
  • **SUNDBERG: "On the balancing of single phase loads" ASEA JOURNAL, Bd. 52, Nr. 5, 1979, Seiten 119-121, XP001120176**
  • **L GYUNGY: "Principles and Applications of Static Thyristor-Controlled Shunt Compensators" IEEE TRANSACTIONS ON POWER APPARATUS AND SYSTEMS, Bd. 97, Nr. 5, 1978, Seiten 1935-1945, XP001120178**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 085 637 B1

## Beschreibung

Die vorliegende Erfindung betrifft ein Verfahren nach dem Oberbegriff des Patentanspruchs 1 sowie eine Vorrichtung zur Durchführung des Verfahrens.

## Technisches Gebiet

Die Versorgung mit elektrischer Energie erfolgt hauptsächlich und vorzugsweise über symmetrische Dreiphasensysteme. Infolge von ungleichen Lasten zwischen den einzelnen Phasen werden derartige Dreiphasensysteme asymmetrisch, was des weiteren zur Folge hat, dass Energieverluste oder Schäden bei elektrischen Maschinen entstehen, die mit dem Dreiphasensystem verbunden sind. Asymmetrische Dreiphasensysteme zeichnen sich dabei nicht nur durch asymmetrische Ströme und Phasen aus, sondern insbesondere auch durch asymmetrische Spannungen, und zwar aufgrund der unterschiedlichen Spannungsabfälle in den einzelnen Zweigen.

Insbesondere die erwähnten asymmetrischen Spannungen beeinflussen die mit dem Dreiphasensysteme verbundenen elektrischen Maschinen in negativer Weise. Abhängig vom Grad der Asymmetrie ist zunächst mit erhöhten Energieverlusten, dann mit reduzierter Lebensdauer und schliesslich mit einem Ausfall der Maschine zu rechnen. Aus diesem Grund wurden internationale Standards und Empfehlungen erlassen, in denen der maximal zulässige Grad an Asymmetrie eines Dreiphasensystems festgelegt worden sind (Engineering Recommendation, IEC - The Electrical Council, London, Juni 1975, S. 16).

Eine Asymmetrie bei einem Dreiphasensystems kann beispielsweise durch einen Einphasen-Induktionsofen, durch ein Einphasen-Zugsystem, das direkt an das Dreiphasensystem aufgeschaltet ist, oder durch einen Lichtbogen-Schmelzofen entstehen, der zwar grundsätzlich eine Dreiphasenlast darstellt, bei dem aber eine Asymmetrie kurzfristig entstehen kann, wenn einer oder zwei Lichtbogen erlöschen.

## Stand der Technik

Eine bekannte Methode zur Kompensation von asymmetrischen Lasten wurde von Ch. P. Steinmetz vorgeschlagen (L. Gyugyi et. al, Principle and Applications of static, thyristorcontrolled Shunt Compensators, IEEE Transactions on Power Apparatus and Systems, Vol. PAS-97, No. 5, Sept./Oct. 1978, Seiten 1935 bis 1945, und dabei insbesondere Seite 1936, linke Spalte). Steinmetz konnte zeigen, dass eine zwischen zwei Phasen eines Dreiphasensystems enthaltene ohmsche Last dadurch kompensiert werden kann, indem eine geeignet dimensionierte Kapazität und eine geeignet dimensionierte Induktivität zwischen der Phase, an welche die Ohm'sche Last verbunden ist, und der Phase, welche durch die Ohm'sche Last nicht belastet ist, geschaltet werden. Dabei hat Steinmetz vorausgesetzt, dass es sich um eine reine Ohm'sche Last handelt. Ist diese Bedingung nicht erfüllt, so sind zusätzliche Aufwendungen notwendig, um auch den Leistungsfaktor korrigieren zu können.

Das Ziel einer kompensierten Last kann in theoretischer Hinsicht dadurch erreicht werden, dass erstens das sogenannte Gegensystem (negative-sequence system, L. Gyugyi et. al, Principle and Applications of static, thyrister-controlled Shunt Compensators, IEEE Transactions on Power Apparatus and Systems, Vol. PAS-97, No. 5, Sept./Oct. 1978, Seite 1937, rechte Spalte) eliminiert und zweitens der Leistungsfaktor korrigiert wird. Dies kann in bekannter Weise dadurch erreicht werden, indem eine Kompensationsschaltung in Dreiecksform, bestehend aus reaktiven Elementen wie Kondensatoren und Induktivitäten, vorgesehen wird.

Mit der Verfügbarkeit von Leistungsschaltern - wie beispielsweise Thyristoren - kann der Leistungsfaktor beliebig korrigiert werden, d.h. Dreiphasensysteme konnten auch bei stark variierenden Lasten symmetriert werden. Eine auf diesem Prinzip entwickelte Schaltung ist im vorstehend genannten Aufsatz von Gyugyi et. al. dargestellt und erläutert (Seite 1942, rechte Spalte, Fig. 14).

Diese bekannte Schaltung zur Kompensation von asymmetrischen Lasten weist jedoch den Nachteil auf, dass keine leistungsmässige Optimierung vorgesehen ist. Aus diesem Grund sind die Verluste entsprechend hoch.

## Offenbarung der Erfindung

Der vorliegenden Erfindung liegt daher die Aufgabe zugrunde, ein Verfahren anzugeben, das obenerwähnte Nachteile nicht aufweist.

Diese Aufgabe wird durch die im kennzeichnenden Teil des Patentanspruchs 1 angegebenen Massnahmen gelöst. Vorteilhafte Ausgestaltungen der Erfindung sowie eine Vorrichtung zur Durchführung des Verfahrens sind in weiteren Ansprüchen angegeben.

Die Erfindung weist folgende Vorteile auf: Indem die in der Kompensationseinheit erzeugten Kompensationsströme beliebige Phasen und beliebige Amplituden aufweisen können, wird erfindungsgemäss erreicht, dass die leistungsmässige Auslegung wesentlich reduziert werden kann, um den gleichen Kompensationsgrad zu erlangen, wie er durch die bekannte Kompensationsschaltung von Steinmetz möglich ist.

Das erfindungsgemässe Verfahren arbeitet insbesondere dann optimal, wenn die Amplituden der Kompensationsströme gleich gross sind. Damit sind die Zweige der Kompensationsschaltung gleichmässig ausgelastet.

Des weiteren zeichnet sich das erfindungsgemässe Verfahren dadurch aus, dass Wirkleistung zwischen mindestens zwei Phasen ausgetauscht wird, und zwar über einen Energiezwischenspeicher, der vorzugsweise als Kondensator realisiert ist.

Die Erfindung wird nachfolgend anhand von Zeichnungen beispielsweise näher erläutert. Dabei zeigen

Fig. 1      in schematischer Darstellung, eine Anordnung zur Kompensation von asymmetrischen Lasten bei einem Dreiphasensystem,

Fig. 2      eine spezifische Ausführungsform der Anordnung gemäss Fig. 1,

Fig. 3      ein Ersatzschaltbild eines asymmetrischen Dreiphasesystems,

Fig. 4      ein Zeigerdiagramm des mittels einer Steinmetz-Schaltung kompensierten asymmetrischen Dreiphasensystems gemäss Fig. 3,

Fig. 5 und 6      Zeigerdiagramme des mittels dem erfindungsgemässen Verfahren kompensierten asymmetrischen Dreiphasensystem gemäss Fig. 3.

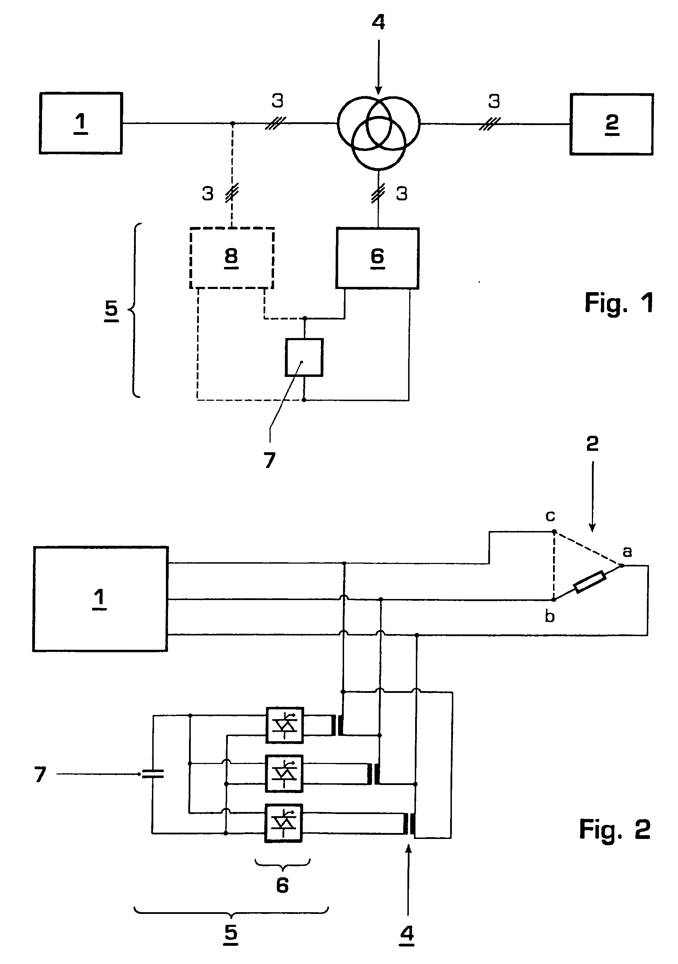

Fig. 1 zeigt in schematischer Darstellung eine erfindungsgemässe Anordnung zur Kompensation einer asymmetrischen Last bei einem Dreiphasensystem, wobei mit 1 ein Versorgungsteil - beispielsweise ein Generator - und mit 2 die asymmetrische Last bezeichnet sind. In Fig. 1 sind Verbindungen zwischen den Netzteilen mit 3 gekennzeichnet, soweit es sich hierbei um die drei Leitungen des Dreiphasensystems handelt.

Zwischen dem Versorgungsteil 1 und der Last 2 ist eine Dreiphasen-Transformatoreinheit 4 vorgesehen, über den eine Kompensatoreinheit 5 an die Übertragungsstrecke zwischen Versorgungsteil 1 und Last 2 gekoppelt ist. Die Kompensatoreinheit 5 ihrerseits besteht zunächst aus einer Schalteinheit 6 und einer Energiespeichereinheit 7, wobei die Schalteinheit 6 eingangsseitig mit dem Dreiphasen-Transformatoreinheit 4 und ausgangsseitig mit der Energiespeichereinheit 7 verbunden ist.

In Fig. 1 ist strichliniert eine weitere Ausführungsform der erfindungsgemässen Anordnung dargestellt. So ist bei dieser zusätzlich zu der eben beschriebenen Ausführungsform eine Ladeeinheit 8 vorgesehen, die eingangsseitig parallel an die Energiespeichereinheit 7 und ausgangsseitig wiederum an die Übertragungsstrecke zwischen Versorgungsteil 1 und Last 2 angeschlossen ist.

Fig. 2 zeigt eine spezifische Ausführungsform der erfindungsgemässen Anordnung gemäss Fig. 1 ohne Ladeeinheit 8. Die Kompensatoreinheit 5 ist über eine Dreiphasen-Transformatoreinheit 4 in Dreieckschaltung an die drei Phasen R, S und T der Übertragungsstrecke zwischen Versorgungsteil 1 und Last 2 angeschlossen.

Auf den Sekundärseiten der Dreiphasen-Transformatoreinheit 4 ist je ein Leistungsschaltelement S1 bzw. S2 bzw. S3 vorgesehen, wobei deren Ausgänge mit einem als Energiezwischenspeicher wirkenden Kondensator 7 verbunden sind.

Als Leistungsschaltelemente S1 bis S3 kommen beispielsweise GTOs-(Gate-Turn-Off-Thyristoren) oder IGBTs-(Insulated-Gate-Bipolar-Transistoren) zum Einsatz.

In Fig. 2 ist die Last 2 durch eine reduzierte Dreieckschaltung dargestellt, bei der die Asymmetrie in einer Impedanz zwischen den Phase a und b besteht. Erfindungsgemäss wird diese Asymmetrie mit Hilfe der Kompensatoreinheit 5 eliminiert, so dass die übrigen an die Übertragungsstrecke angeschlossenen Verbraucher bzw. Erzeuger immer ein symmetrisches Dreiphasensystem vorfinden, wobei die Kompensation der asymmetrischen Last dadurch erreicht wird, dass Leistung zwischen den Phasen transferiert wird. Das Verfahren zur Kompensation besteht also darin, dass ein gegenlaufendes System (negative-sequence system, L. Gyugyi et. al, Principle and Applications of static, thyrister-controlled Shunt Compensators, IEEE Transactions on Power Apparatus and Systems, Vol. PAS-97, No. 5, Sept./Oct. 1978, Seite 1937, rechte Spalte), das durch eine asymmetrische Last erzeugt wird, durch ein weiteres gegenlaufendes System, das dem erst genannten entgegenwirkt, erzeugt wird, womit ein daraus entstehendes gesamtes gegenlaufendes System im jeweiligen Dreiphasensystem null wird, d.h. verschwindet. Der Vorteil dieses Verfahrens besteht darin, dass die Leistungsauslegung der Bauteile und damit die Kosten erheblich geringer sind als bei den bekannten Verfahren.

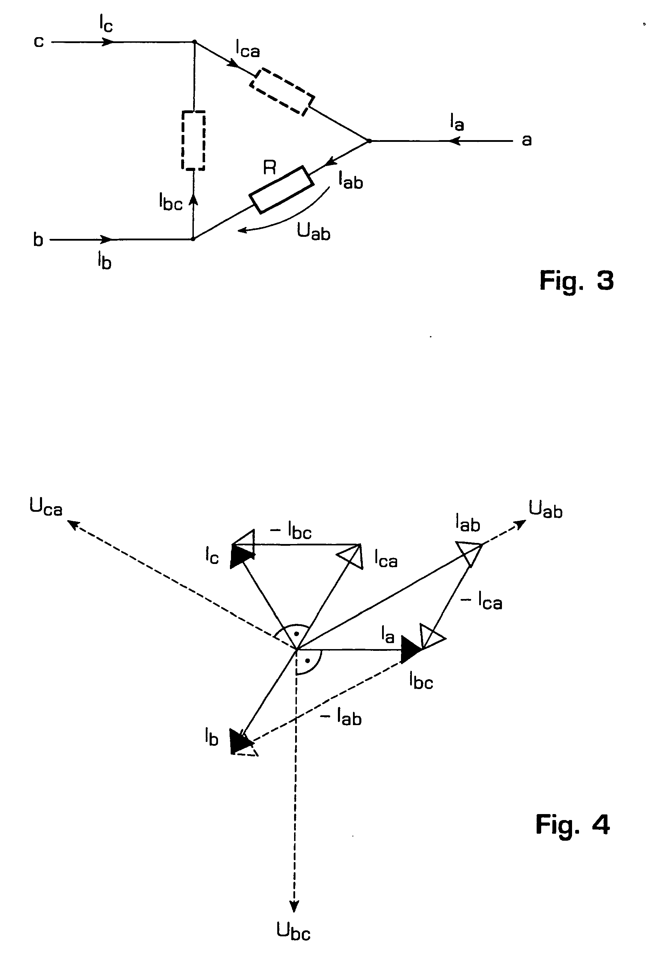

Im folgenden wird das erfindungsgemässe Verfahren anhand einer asymmetrischen Dreieckslast gemäss Fig. 3 erläutert, wobei davon ausgegangen wird, dass im Zweig ab eine reine, die Asymmetrie ausmachende Widerstandslast R vorhanden ist.

Der Einfachheit halber wird darüber hinaus angenommen, dass der Widerstand R zu einem Strom $I_{ab}$ mit der normierten Amplitude 1pu im entsprechenden Zweig führt. Dieser Strom $I_{ab}$ ist für die reine Widerstandslast in Phase mit der Dreiecksspannung $u_{ab}$.

Nach der Methode von Steinmetz wird das asymmetrische Dreiphasensystem gemäss Fig. 3 in bekannter Weise dadurch kompensiert, indem die Phasen a und b über eine Induktivität und die Phasen b und c über eine Kapazität verbunden werden, wobei die Grösse der Induktivität bzw. der Kapazität derart gewählt werden, dass der jeweils durch ein Element fliessende Strom eine Amplitude von 1/sqrt(3) pu aufweist. Im Zweig ca eilt damit der Strom $I_{ca}$ der Spannung $u_{ca}$ um 90° nach, und im Zweig bc eilt der Strom $I_{bc}$ der Spannung $u_{bc}$ um 90° voraus. Diese Situation ist im Zeigerdiagramm von Fig. 4 dargestellt, wobei die Phasenströme wie folgt erhalten werden können:

$$I_a = I_{ab} - I_{ca}$$

$$I_b = I_{bc} - I_{ab}$$

$$I_c = I_{ca} - I_{bc}$$

Zudem gilt beim symmetrischen Dreiphasensystem

$$I_a + I_b + I_c = 0.$$

Unter obiger Annahme, dass die Amplitude des Laststromes $I_{ab}$ 1pu beträgt, muss eine Phase für eine Leistungsübertragung von 1/sqrt(3) = 0,577 ausgelegt werden. Unter Berücksichtigung, dass die asymmetrische Last in irgendeinem der Zweige ab, bc oder ca vorhanden sein kann, so muss die Gesamtleistung 3 * 1/sqrt (3) = 1,73pu betragen können.

Dieses Resultat gilt - wie erwähnt - für rein Ohm'sche Lasten. Unter Verwendung von einer Induktivität und einer Kapazität können auch andere nicht nur rein Ohm'sche Lasten kompensiert werden, allerdings würde die benötigte Leistung nicht auf die beiden Zweige ca und bc gleichmässig verteilt sein.

Das erfindungsgemässe Verfahren besteht nun darin, dass nicht nur Blindleistung zwischen den Zweigen - im Beispiel gemäss Fig. 3 zwischen den Zweigen ca und bc - ausgetauscht wird, sondern dass Wirkleistung über einen Zwischenspeicher zwischen den Zweigen ausgetauscht wird, und zwar je nach Kompensationsbedarf. Dabei erfolgt der Energieaustausch derart, dass die Zweigbelastung mit Kompensationsströmen möglichst symmetrisch erfolgt, womit die Auslegung der Schalteinheit 5 (Fig. 1 und 2) für eine vorgegebene maximale Kompensationsleistung gegenüber bekannten Methoden wesentlich reduziert werden kann. Für das anhand Fig. 3 und 4 erläuterte Beispiel ergibt sich mit dem erfindungsgemässen Verfahren eine Reduktion der leistungsmässigen Auslegung von ca. 42%, denn über die drei Phasen betrachtet, beträgt die Leistungsbereitstellung beim erfindungsgemässen Verfahren lediglich 3 * 1/3 = 1pu gegenüber den 1,73 pu der klassischen Steinmetz-Methode.

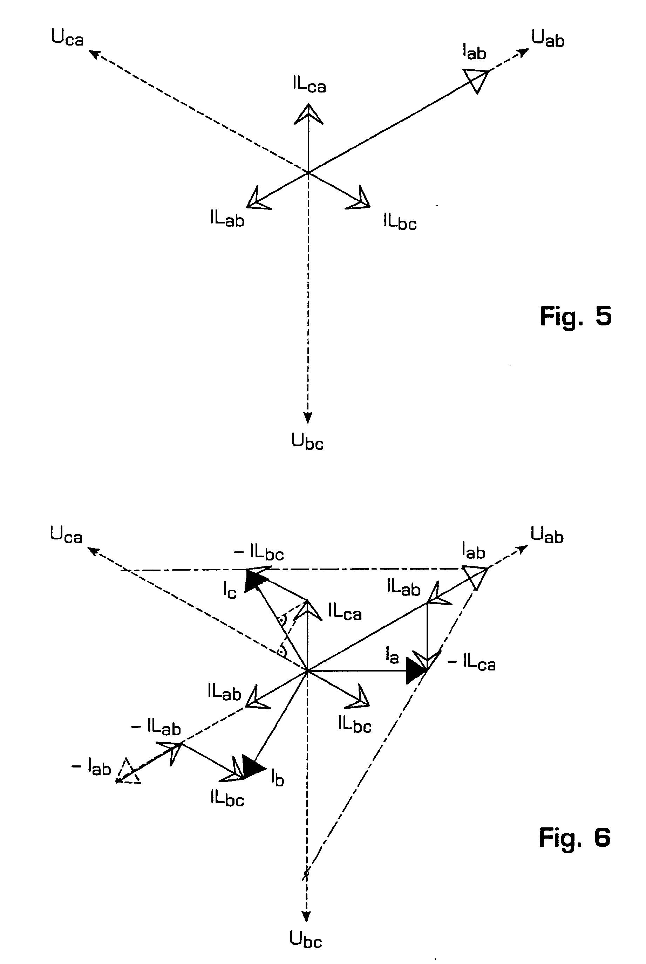

In Fig. 5 sind die Kompensationsströme $IL_{ca}$, $IL_{ab}$ und $IL_{bc}$ dargestellt, die zur Kompensation des asymmetrischen Dreiphasensystems gemäss Fig. 3 dienen. Erkennbar ist, dass in allen Phasen Kompensationsströme fliessen - nämlich mit Amplitude 1/3 pu für jeden der Kompensationsströme $IL_{ca}$, $IL_{ab}$ und $IL_{bc}$ -, womit offensichtlich wird, dass nicht nur Blindleistung sondern auch Wirkleistung zwischen den Zweigen ausgetauscht wird. Dies erfolgt über den erwähnten Energiezwischenspeicher bzw. über die Energiespeichereinheit 7 gemäss Fig. 1 und 2. Die Kompensationsströme sind ebenfalls symmetrisch, d.h. sie weisen identische Amplituden und entsprechende Phasenunterschiede von 120° auf.

In Fig. 6 ist das Zeigerdiagramm für die Kompensation der asymmetrischen Last R gemäss Fig. 3 dargestellt. Das entsprechende Gleichungssystem lautet wie folgt:

$$I_a = I_{ab} + IL_{ab} - IL_{ca}$$

$$I_b = -I_{ab} - IL_{ab} + IL_{bc}$$

$$I_c = IL_{ca} - IL_{bc}$$

und bei Symmetrie selbstverständlich auch

$$I_a + I_b + I_c = 0.$$

Wie erwähnt ist der Strom in den Zweigen ca und bc nicht mehr nur reaktiv, sondern es findet ein Austausch von Wirkleistung zwischen Zweigen über einen Energiezwischenspeicher statt. Aus Fig. 6 ergibt sich beispielsweise aus der Projektion des Stromzeigers $IL_{ca}$ auf den Spannungszeiger $u_{ca}$ den Wirkanteil des Stromes. Dies bedeutet, dass der erfindungsgemässe Kompensator Wirkleistung konsumiert, mit anderen Worten wird Energie in der Zwischenspeichereinheit 7 (Fig. 1 und 2) gespeichert. Die gespeicherte Energie wird in den Zweige ⚏ab⚏ zurückgespiesen, womit die Energie in der Speichereinheit 7 im Mittel konstant bleibt.

Die vorstehenden Anwendungsfälle beziehen sich auf eine reine Widerstandslast. Die Erfindung eignet sich darüber hinaus auch zur Kompensation von beliebigen Impedanzen, die bekanntlich einen reellen und einen imaginären Anteil aufweisen, letzteres für einen induktiven bzw. kapazitiven Anteil stehend. Die aufgezeigten Vorteile gelten in gleicher Weise auch für beliebige Impedanzen.

Erfindungsgemäss kann die in der Energiespeichereinheit gespeicherte Energie beliebig auf die einzelnen Zweige des Mehrphasensystems verteilt werden. Dies kann für weitere Kompensationszwecke verwendet werden. So ist denkbar, dass mit Hilfe der erfindungsgemässen Lehre anstelle der Kompensation der Grundwelle, wie dies vorstehend ausführlich erläutert worden ist, eine Kompensation von Harmonischen erreicht wird. Selbstverständliche können die Grundwelle und allfällige Harmonische auch gleichzeitig kompensiert werden. In diesem Fall kann die total zur Verfügung stehende Leistung grösser sein als die oben angegebenen 3 * 1/3 pu. Die tatsächlich benötigte Leistung hängt im wesentlichen von der gewünschten Aufteilung der benötigten Leistung auf die einzelnen Zweige ab.

Die Erläuterungen zu den Ausführungsbeispielen erschöpfen sich auf die Anwendung bei Dreiphasensystemen. Denkbar ist auch, ohne den Erfindungsgedanken zu verlassen, dass das erfindungsgemässe Verfahren auch allgemein bei Mehrphasensystemen mit Erfolg angewendet werden kann.

**Patentansprüche**

1. Verfahren zur Kompensation von asymmetrischen Lasten in Mehrphasensystemen, bei dem mit einer Kompensationseinheit (5) Kompensationsströme (IL$_{ab}$, IL$_{bc}$, IL$_{ca}$) erzeugt werden, die beliebige Phasen und/oder beliebige Amplituden aufweisen, **dadurch gekennzeichnet,**
dass von mindestens einer Phase auf mindestens eine andere Phase Wirkleistung übertragen wird, und
dass die Kompensationsströme (IL$_{ab}$, IL$_{bc}$, IL$_{ca}$) symmetrisch sind.

2. Verfahren nach Anspruch 1, **dadurch gekennzeichnet, dass** zur Erzeugung der Kompensationsströme (IL$_{ab}$, IL$_{bc}$, IL$_{ca}$) Energie einer Energiespeichereinheit (7) zugeführt bzw. entnommen wird.

3. Vorrichtung zur Durchführung des Verfahrens nach einem der Ansprüche 1 bis 2, mit einer Kompensationseinheit (5), bestehend aus einer Schalteinheit (6) und einer Energiespeichereinheit (7), wobei die Energiespeichereinheit (7) über die Schalteinheit (6) mit einem Mehrphasensystem verbindbar ist, **dadurch gekennzeichnet,**
dass eine Ladeeinheit (8) vorgesehen ist, die eingangsseitig mit der Energiespeichereinheit (7) und ausgangsseitig mit dem Mehrphasensystem verbindbar ist.

4. Vorrichtung nach Anspruch 3, **dadurch gekennzeichnet, dass** die Schalteinheit (6) über einen Transformator (4) an das Mehrphasensystem anschliessbar ist.

5. Vorrichtung nach einem der Ansprüche 3 oder 4, **dadurch gekennzeichnet, dass** die Energiespeichereinheit (7) als Kondensator realisiert ist.

6. Vorrichtung nach einem der Ansprüche 3 bis 5, **dadurch gekennzeichnet, dass** die Schalteinheit (6) aus GTO-(Gate-Turn-Off)-Thyristoren oder IGBT-(Insulated-Gate-Bipolar-Transistor) bestehen.

7. Verwendung der Vorrichtung nach einem der Ansprüche 3 bis 6 zur Kompensation von asymmetrischen Lasten bei Dreiphasensystemen.

**Claims**

1. Method to compensate for unbalanced loads in polyphase systems, in which a compensation unit (5) produces compensation currents (IL$_{ab}$, IL$_{bc}$, IL$_{ca}$) which have arbitrary phases and/or arbitrary amplitudes, **characterized in that** real power is transferred from at least one phase to at least one other phase, and **in that** the compensation currents (IL$_{ab}$, IL$_{bc}$, IL$_{ca}$) are balanced.

2. Method according to claim 1, **characterized in that** the compensation currents (IL$_{ab}$, IL$_{bc}$, IL$_{ca}$) are produced by supplying energy to or taking energy from an energy storage unit (7).

3. Apparatus for carrying out the method according to one of claims 1 and 2, having a compensation unit (5), comprising a switching unit (6) and an energy storage unit (7), wherein the energy storage unit (7) can be connected to a polyphase system via the switching unit (6), **characterized in that** a charging unit (8) is provided, whose input side can be connected to the energy storage unit (7) and whose output side can be connected to the polyphase system.

4. Apparatus according to claim 3, **characterized in that** the switching unit (6) can be connected to the polyphase system via a transformer (4).

5. Apparatus according to one of claims 3 and 4, **characterized in that** the energy storage unit (7) is in the form of a capacitor.

6. Apparatus according to one of claims 3 to 5, **characterized in that** the switching unit (6) comprises GTO (Gate Turn-Off) thyristors or IGBTs (Insulated-Gate Bipolar Transistors).

7. Use of the apparatus according to one of claims 3 to 6 to compensate for unbalanced loads in three-phase systems.

**Revendications**

1. Procédé pour compenser des charges asymétriques dans des systèmes à plusieurs phases avec lequel des courants de compensation (IL$_{ab}$, IL$_{bc}$, IL$_{ca}$) sont générés avec une unité de compensation (5), lesquels présentent des phases quelconques et/ou des amplitudes quelconques, **caractérisé en ce que** la puissance active est transmise d'au moins une phase sur au moins une autre phase et que les courants de compensation ($IL_{ab}$, $IL_{bc}$, $IL_{ca}$) sont symétriques.

2. Procédé selon la revendication 1, **caractérisé en ce que** pour générer les courants de compensation ($IL_{ab}$, $IL_{bc}$, $IL_{ca}$), de l'énergie est acheminée vers ou prélevée d'une unité d'accumulation d'énergie (7).

3. Dispositif pour mettre en oeuvre le procédé selon l'une des revendications 1 à 2, comprenant une unité de compensation (5), composée d'une unité de commutation (6) et d'une unité d'accumulation d'énergie (7), l'unité d'accumulation d'énergie (7) pouvant être reliée avec un système à plusieurs phases par le biais de l'unité de commutation (6), **caractérisé en ce qu'**il est prévu une unité de charge (8) dont l'entrée peut être reliée avec l'unité d'accumulation d'énergie (7) et la sortie avec le système à plusieurs phases.

4. Dispositif selon la revendication 3, **caractérisé en ce que** l'unité de commutation (6) peut être raccordée au système à plusieurs phases par le biais d'un transformateur (4).

5. Dispositif selon l'une des revendications 3 ou 4, **caractérisé en ce que** l'unité d'accumulation d'énergie (7) est réalisée sous la forme d'un condensateur.

6. Dispositif selon l'une des revendications 3 à 5, **caractérisé en ce que** l'unité de commutation (6) se compose de thyristors GTO (Gate-Turn-Off - à extinction par la gâchette) ou d'IGBT (Insulated-Gate-Bipolar-Transistor - Transistor bipolaire à gâchette isolée).

7. Utilisation du dispositif selon l'une des revendications 3 à 6 pour compenser des charges asymétriques dans des systèmes triphasés.

Fig. 1

Fig. 2

**Fig. 3**

**Fig. 4**

Fig. 5

Fig. 6